# EUROPÄISCHE PATENTSCHRIFT

(11) **EP 1 234 290 B1**
(45) Veröffentlichungstag und Bekanntmachung des Hinweises auf die Patenterteilung: **04.03.2009**
(21) Anmeldenummer: 00956104.4
(22) Anmeldetag: 26.07.2000
(51) Int. Cl.: G08C 19/28

(54) **PROGRAMMIERUNG EINER FERNSTEUEREINRICHTUNG DURCH DAS FERNGESTEUERTE GERÄT**
PROGRAMMING OF A REMOTE CONTROL SET BY THE REMOTE-CONTROLLED APPARATUS
PROGRAMMATION D'UN DISPOSITIF DE TELECOMMANDE PAR L'APPAREIL TELECOMMANDE

(30) Priorität: 26.07.1999 DE 19935004
(43) Veröffentlichungstag der Anmeldung: 28.08.2002
(73) Patentinhaber: Micronas GmbH, 79108 Freiburg i. Br. (DE)
(72) Erfinder: BUCHENRIEDER, Klaus, D-85521 Riemerling (DE)
(74) Vertreter: Bickel, Michael
(86) Internationale Anmeldenummer: PCT/DE2000/002462
(87) Internationale Veröffentlichungsnummer: WO 2001/008119

(56) Entgegenhaltungen:
- EP-A- 0 780 990
- US-A- 5 438 325
- US-A- 5 909 183

## Beschreibung

Die Erfindung betrifft eine Fernbedienungsanordnung mit einem fernzubedienenden Gerät, das eine Empfängereinrichtung zum Empfang eines Signals zum Auslösen einer Funktion dieses Geräts aufweist, und mit einem räumlich vom fernzubedienenden Gerät getrennten Bedienungsgerät, das eine Sendereinrichtung zum wahlweisen Senden des Signals zum Auslösen der Funktion des fernzubedienenden Geräts aufweist.

Ein allgemein bekanntes Beispiel einer derartigen Fernbedienungsanordnung ist ein Fernsehgerät, das von einer tragbaren mobilen Fernbedienung fernzubedienen ist. Das Fernsehgerät weist eine Empfängereinrichtung zum Empfang eines Signals zum Auslösen einer Funktion dieses Geräts auf und bildet das fernzubedienenden Gerät der Anordnung. Die Fernbedienung weist eine Sendereinrichtung zum wahlweisen Senden des Signals zum Auslösen der Funktion des Fernsehgeräts auf und bildet das räumlich vom fernzubedienenden Gerät getrennte Bedienungsgerät der Anordnung.

Die Empfängereinrichtung des Fernsehgeräts weist beispielsweise einen Infrarotdetektor und die Fernbedienung beispielsweise einen Infrarotsenders ausgebildete Sendereinrichtung auf.

Zu den auszulösenden Funktionen des Fernsehgeräts gehören beispielsweise das Einschalten des Geräts, ein Einstellen des Geräts auf einen bestimmten Kanal, ein bestimmtes Einstellen und/oder Abstimmen des Geräts, beispielsweise die Einstellung oder Abstimmung einer akustischen Lautstärke, einer Bildhelligkeit, eines Bildkontrasts und/oder einer Bildfarbe des Geräts, und/oder das Ausschalten des Geräts.

Der Infrarotdetektor des Fernsehgeräts kann beispielsweise eine für infrarotes Licht empfindliche Halbleiterdiode und der Infrarotsender der Fernbedienung beispielsweise eine infrarotes Licht abstrahlende Halbleiterdiode sein.

Fernbedienungen für Fernsehgeräte sind gewöhnlich werkseitig für ein bestimmtes Gerät oder eine bestimmte Serie dieses Geräts vorprogrammiert. Wird eine Fernbedienung defekt oder soll diese aus irgendeinem anderen Grund ersetzt werden, so kann neben einer für diesen Fernsehgerätetyp vorprogrammierten Fernbedienung auch eine lernfähige Fernbedienung eingesetzt werden. Eine derartige Fernbedienung kann dann auch mehrere Fernbedienungen über eine sogenannte Mehrebenenprogrammierung ersetzen, und damit wird zum Beispiel die Anzahl der Fernbedienungen auf dem Wohnzimmertisch verringert.

Zur Programmierung einer lernfähigen Fernbedienung für ein bestimmtes Fernsehgerät wird eine funktionsfähige originale Fernbedienung für dieses bestimmte Gerät benutzt. Der Lern- oder Programmiervorgang läuft dabei folgendermaßen ab: Schrittweise werden nach und nach Codesignale von der originalen Fernbedienung durch Tastenbedienung gesendet und in der sich in einem Programmiermodus befindenden lernfähigen Fernbedienung abgespeichert, wonach die einem gesendeten Code zugeordnete Funktion des Fernsehgeräts einer bestimmten Taste der lernfähigen Fernbedienung durch Betätigen einer oder mehrerer Tasten zugeordnet wird. Nach dem Programmieren sendet die derart programmierte Fernbedienung beim Drücken der bestimmten Taste den gespeicherten Code von ihrem Infrarotsender als Codesignal, beispielsweise eine Impulssequenz, an das Fernsehgerät, welches nach dem Empfang dieses Codesignals eine diesem Code zugeordnete Funktion ausführt.

Ein Problem ergibt sich bei der Programmierung, wenn z.B. die originale Fernbedienung defekt oder nicht mehr vorhanden ist, oder wenn der notwendige Code nicht generiert werden kann, weil dieser nicht bekannt ist. In diesem Fall kann eine lernfähige oder programmierbare Fernbedienung für das Fernsehgerät überhaupt nicht programmiert werden. Das Fernsehgerät kann dann eventuell völlig unbenutzbar werden.

Fernbedienungen für Fernsehgeräte werden normalerweise nur für Funktionen zur Bedienung eines bestimmten Fernsehgeräts vorprogrammiert. Zusatzfunktionen wie sie beispielsweise zur Nutzung neuer Dienste, z.B. Internet-TV oder interaktives Fernsehen, benötigt werden, sind meist gar nicht vorgesehen. Der Codevorrat eines Zusatzgerätes oder -modus zum eventuellen Einbau in die Fernbedienung ist vorher gewöhnlich nicht bekannt und kann daher nicht berücksichtigt werden.

Dienste oder Funktionen, die beispielsweise aus einem Java Applet heraus zur interaktiven Steuerung notwendig sind, können nur durch interaktives Nachladen der Fernbedienung bereitgestellt werden. Würde beispielsweise ein Benutzer eine Fernbedienung mit einer normalen Tastatur kaufen, so könnte er diese Vorrichtung nicht direkt mit seinem Fernsehgerät verwenden.

Lösungen dieses Problems sind:
- Eine fixe Codierung bei Fernbedienungen und tastaturähnlichen Bedienungsgeräten. Diese ist herstellergebunden.
- Eine Übertragung von Codes von einer Fernbedienung auf eine andere Fernbedienung in einem "Back-to-Back-Copy-Modus". Bei diesem Modus sendet eine Fernbedienung auf Tastendruck einen Code und die programmierbare andere Fernbedienung legt diesen Code nach Empfang in einem internen Speicher ab. Wird dann eine Taste betätigt, so wird der entsprechend gelernte und zugeordnete Code gesendet.
- Herstellerseitig für mehrere Fernsehgeräte oder andere Endgeräte vorprogrammierte Fernbedienungen. Die Auswahl erfolgt über eine Eingabe zur Auswahl des gewünschten Endgerätes, gegebenenfalls eines ähnlichen Modells. Oftmals sind jedoch nicht alle Funktionen vorhanden, und damit können nur die Grundfunktionen eines Serientyps benutzt werden.

Die US 5,909,183 beschreibt ein Verfahren zur Programmierung einer Fernbedienung für ein fernzubedienendes Gerät, beispielsweise einen Videorekorder. Bei diesem Verfahren fordert die Fernbedienung einen Befehlssatz für das zu steuernde Objekt von dem zu steuernden Objekt an. Dieser Befehlssatz wird dann von dem zu steuernden Objekt auf die Fernbedienung heruntergeladen und steht nachfolgend zu Fernbedienungszwecken zur Verfügung.

Die EP 0 780 990 A2 beschreibt ein Verfahren zur Fernsteuerung von elektronischen Geräten und eine Vorrichtung zur Fernsteuerung von elektronischen Geräten. Bei diesem Verfahren werden Informationsdaten bezüglich Fernsteuerungsfunktionen eines zu steuernden elektronischen Geräts zu einem Fernsteuerungsgerät übertragen. Diese Informationsdaten werden in dem Fernsteuerungsgerät gespeichert und bei einem Steuerungsvorgang abgerufen, um die jeweils für den Steuerungsvorgang notwendigen Steuerungsdaten auszuwählen und auszusenden.

Der Erfindung liegt die Aufgabe zugrunde, eine Fernbedienungsanordnung bereitzustellen, die eine breitere Anwendung als eine Anordnung der eingangs genannten Art ermöglicht.

Diese Aufgabe wird durch eine Fernbedienungsanordnung gelöst, welche die im Anspruch 1 angegebenen Merkmale aufweist. Durch die Erfindung wird auch ein fernzubedienendes Gerät, welches die in Anspruch 9 angegebenen Merkmale aufweist, und ein Verfahren zum Programmieren einer Fernbedienungsanordnung gemäß Anspruch 10 bereitgestellt.

Die erfindungsgemäße Fernbedienungsanordnung weist unter anderem die Merkmale auf, daß das fernzubedienende Gerät zusätzlich zu dessen Empfängereinrichtung eine Sendereinrichtung zum wahlweisen Senden des Signals zum Auslösen der Funktion dieses Geräts aufweist, und daß das Bedienungsgerät zusätzlich zu dessen Sendereinrichtung eine Empfängereinrichtung zum Empfang des Signals zum Auslösen der Funktion des fernzubedienenden Geräts aufweist.

Ein wesentlicher Vorteil der neuartigen Fernbedienungsanordnung ist darin zu sehen, daß es möglich ist, das Bedienungsgerät individuell und universell sowie unabhängig vom Typ und Hersteller des fernzubedienenden Geräts in bezug auf dieses Gerät einzustellen. Dabei kann das Bedienungsgerät vorteilhafterweise allein vom fernzubedienenden Gerät her eingestellt werden. Überdies besteht vorteilhafterweise die Möglichkeit, das fernzubedienende Gerät und Bedienungsgerät ohne Zuhilfenahme eines weiteren Geräts, beispielsweise eines weiteren Bedienungsgeräts, aufeinander einzustellen und/oder abzustimmen.

Bei der erfindungsgemäßen Fernbedienungsanordnung ist das Bedienungsgerät wahlweise in zumindest einen bestimmten Zustand zu bringen und weist eine Zuordnungseinrichtung auf, die das von der Empfängereinrichtung des Bedienungsgeräts empfangenes Signal zum Auslösen der Funktion des fernzubedienenden Geräts und den bestimmten Zustand fest einander zuordnet, und eine Sendereinrichtung zum wahlweisen Senden des dem bestimmten Zustand des Bedienungsgeräts fest zugeordneten Signals, wenn das Bedienungsgerät den bestimmten Zustand einnimmt.

Bei einer bevorzugten und vorteilhaften Ausgestaltung dieser Ausführungsform weist die Zuordnungseinrichtung eine Speichereinrichtung zum Speichern des von der Empfängereinrichtung des Bedienungsgeräts empfangenen Signals zum Auslösen der Funktion des fernzubedienenden Geräts bei einem bestimmten Speicherplatz und die Sendereinrichtung des Bedienungsgeräts eine Wähleinrichtung zum Wählen des bestimmten Speicherplatzes und zum wahlweisen Senden des beim gewählten bestimmten Speicherplatz gespeicherten Signals auf.

Bei einem konkreten Beispiel dieser Ausgestaltung ist das fernzubedienende Gerät ein Fernsehgerät mit einer Empfängereinrichtung zum Empfang eines Signals zum Auslösen einer Funktion des Fernsehgeräts und mit einer Sendereinrichtung zum wahlweisen Senden des Signals zum Auslösen der Funktion des Fernsehgeräts, und das Bedienungsgerät ist eine Fernbedienung für das Fernsehgerät, die eine Sendereinrichtung zum wahlweisen Senden des Signals zum Auslösen der Funktion des Fernsehgeräts und eine Empfängereinrichtung zum Empfang des Signals zum Auslösen der Funktion des Fernsehgeräts aufweist.

Die Fernbedienung weist beispielsweise eine Zuordnungseinrichtung auf, die einen Speicher mit Speicherplätzen zum jeweiligen Speichern eines von der Empfängereinrichtung der Bedienung empfangenen Signals zum Auslösen einer Funktion des Fernsehgerät und eine Tastatur mit Tasten, deren jeder je ein Speicherplatz des Speichers fest zugeordnet ist, umfaßt. Das bei einem bestimmten Speicherplatz gespeicherte Signal wird wahlweise durch Betätigen der diesem Speicherplatz fest zugeordneten Taste von der Sendereinrichtung der Bedienung gesendet, so daß diese Taste zugleich eine Wähleinrichtung zum Wählen des bestimmten Speicherplatzes und zum wahlweisen Senden des beim diesem gewählten Speicherplatz gespeicherten Signals bildet.

Jede bestimmte Belegung der Speicherplätze der Fernbedienung mit von der Empfängereinrichtung der Bedienung empfangenen Signalen definiert je einen bestimmten Zustand der Fernbedienung. Jede Änderung einer bestehenden Belegung der Speicherplätze und damit eines Zustandes der Bedienung führt diese in einen andern Zustand über. Ist beispielsweise bei der in einem bestimmten Zustand befindlichen Bedienung ein bei einem bestimmten Speicherplatz gespeichertes Signal durch ein von der Empfängereinrichtung der Bedienung empfangenes anderes bestimmtes Signal ersetzt worden, das von diesem bisher gespeicherten Signal verschieden ist, befindet sich die Bedienung allein durch diese Änderung in einem anderen bestimmten Zustand, der vom bisherigen Zustand verschieden ist.

Das Bedienungsgerät weist eine Sendereinrichtung zum Senden eines Zustandssignals zur eindeutigen Kennzeichnung des bestimmten Zustandes des Bedienungsgeräts auf und das fernzubedienende Gerät eine Empfängereinrichtung zum Empfang des vom Bedienungsgerät gesendeten Zustandssignals und eine Zuordnungseinrichtung, die dem empfangenen Zustandssignal das Signal zum Auslösen der Funktion des fernzubedienenden Geräts zuordnet, das nach dieser Zuordnung von der Sendereinrichtung des fernzubedienenden Geräts zu senden ist.

Beispielsweise weist das Bedienungsgerät einen Joystick bzw. Steuerknüppel auf, der in verschiedene bestimmte Stellungen gebracht werden kann, deren jede einem anderen bestimmten Zustand des Bedienungsgeräts entspricht. In jeder bestimmten Stellung des Joystick sendet dieses Bedienungsgerät beispielsweise wahlweise ein dieser Stellung zugeordnetes Signal, das als Zustandssignal zur eindeutigen Kennzeichnung des dieser bestimmten Stellung entsprechenden bestimmten Zustandes des Bedienungsgeräts verwendet wird. Dieses Signal wird von der Empfängereinrichtung des fernzubedienenden Geräts empfangen. Die Zuordnungseinrichtung des fernzubedienenden Geräts ordnet diesem empfangenen Zustandssignal ein bestimmtes Signal zum Auslösen einer bestimmten Funktion des fernzubedienenden Geräts zu, das nach dieser Zuordnung von der Sendereinrichtung des fernzubedienenden Geräts gesendet, von der Empfängereinrichtung des den Joystick aufweisenden Bedienungsgeräts empfangen und beim Bedienungsgerät der bestimmten Stellung des Joysticks fest zugeordnet wird.

Von Vorteil ist eine Einrichtung zur Erzeugung einer vorzugsweise visuell angezeigten Information, die einer bestimmten Funktion des fernzubedienenden Geräts zugeordnet ist und dazu auffordert, das Bedienungsgerät in einen bestimmten Zustand zu bringen. Eine solche Einrichtung ist insbesondere bei der erwähnten Ausgestaltung der die Zuordnungseinrichtung aufweisenden Ausführungsform sehr vorteilhaft.

Vorteilhaft ist es, wenn die Sendereinrichtung und/oder Empfängereinrichtung des fernzubedienenden Geräts einen Prozessor aufweist. Der Prozessor, vorzugsweise ein Mikroprozessor, kann vorteilhafterweise eine Vielzahl verschiedener Aufgaben, darunter beispielsweise die Funktion einer erwähnten Zuordnungseinrichtung und/oder der erwähnten Einrichtung zur Erzeugung einer Information, auf einfache und bequeme Weise softwaremäßig realisieren.

Dabei ist es vorteilhaft, wenn das fernzubedienende Gerät einen Bildgenerator zur Erzeugung eines Bildes einem Bildschirm aufweist. Dies bietet die Möglichkeit einer visuellen Anzeige bezüglich beliebiger auf dem Prozessor ablaufender Programme.

Bevorzugterweise ist das Bedienungsgerät eine tragbare mobile Fernbedienung.

Eine weitere sehr vorteilhafte Weiterbildung der erfindungsgemäßen Anordnung ist darin zu sehen, daß zumindest ein vom fernzubedienenden Gerät und vom Bedienungsgerät räumlich getrenntes zusätzlichen Gerät vorhanden ist, das eine Empfängereinrichtung zum Empfang eines von der Sendereinrichtung des fernzubedienenden Geräts gesendeten Signals und eine Sendereinrichtung zum Senden eines von der Empfängereinrichtung des fernzubedienenden Geräts zu empfangenden Signals aufweist.

Diese Weiterbildung hat beispielsweise den Vorteil, daß beliebige zusätzliche Geräte im Wirkungsbereich der Sender- und Empfängereinrichtung des fernzubedienenden Geräts programmiert und/oder nachhaltig beeinflußt werden können.

Das zusätzliche Gerät ist vorzugsweise ein insbesondere programmierbares Haushaltsgerät, beispielsweise eine Waschmaschine, Spülmaschine, Kaffeemaschine, ein Herd usw.

Bei dem fernzubedienenden Gerät, beispielsweise ein Telekommunikationsendgerät, ist die Empfängereinrichtung vorteilhafterweise um entsprechende Betriebssoftware erweitert, so daß vom Gerät 1 aus unter Nutzung dessen Standardfunktionalität, umfassend beispielsweise eine Verbindung der Programmierfunktion mit V-Text und/oder Displayfunktion am Endgerät 1, z.B. Fernsehbilddarstellung von Steuerungsinformation, Bedienungsgeräte wie Fernbedienungen sowie andere Geräte direkt interaktiv programmiert werden können.

Die Erfindung wird in der nachfolgenden Beschreibung anhand der Figuren beispielhaft näher erläutert. Es zeigen:
- Figur 1: eine schematische Darstellung eines Ausführungsbeispiels einer erfindungsgemäßen Fernbedienungsanordnung,
- Figur 2: eine schematische Darstellung einer Fernbedienung mit einem Joystick, die beim Ausführungsbeispiel nach Figur 1 anstelle der dort dargestellten Fernbedienung verwendet werden kann,
- Figur 3: eine Schematische Darstellung, zeigend das jetzt nur bruchstückhaft dargestellte und mit einem zusätzlichen Gerät in Kommunikation stehende fernzubedienende Gerät des Ausführungsbeispiels nach Figur 1, und
- Figur 4: einen Schaltplan eines einen Mikroprozessor und eine mit dem Prozessor verbundene Empfängereinrichtung enthaltenden kommerziellen Bausteins für ein fernzubedienendes Kommunikationsendgerät, der mit einer mit dem Prozessor verbundenen Sendereinrichtung erweitert ist.

Das in der Figur-1 dargestellte Ausführungsbeispiel der Fernbedienungsanordnung weist ein fernzubedienendes Gerät 1 mit einer Empfängereinrichtung 11 zum Empfang eines Signals S zum Auslösen einer Funktion dieses Geräts 1 und ein räumlich vom fernzubedienenden Gerät 1 getrenntes Bedienungsgerät 2 mit einer Sendereinrichtung 21 zum wahlweisen Senden des Signals S zum Auslösen der Funktion des fernzubedienenden Geräts 1 auf.

Das fernzubedienende Gerät 1 weist zusätzlich zu dessen Empfängereinrichtung 11 eine Sendereinrichtung 12 zum wahlweisen Senden des Signals S zum Auslösen der Funktion dieses Geräts 1 und das Bedienungsgerät 2 zusätzlich zu dessen Sendereinrichtung 21 eine Empfängereinrichtung 22 zum Empfang des Signals S zum Auslösen einer Funktion des fernzubedienenden Geräts 1 auf.

Beispielsweise ist das fernzubedienende Gerät 1 ein Telekommunikationsendgerät mit einem Bildschirm 15, das mit einem Kommunikationsnetz, beispielsweise dem Internet in Verbindung gebracht werden und verschiedene Funktionen ausführen kann. Zu diesen Funktionen gehören beispielsweise die oben im Zusammenhang mit dem Fernsehgerät erwähnten Funktionen und darüber hinaus weitere Funktionen wie beispielsweise das Herunterladen von Programmen aus dem Netz usw.

Das Bedienungsgerät 2 ist beispielsweise eine Fernbedienung für das Telekommunikationsendgerät 1, die eine Tastatur 23 aufweist, bei der bestimmten Tasten 231 bestimmte Funktionen des Geräts 1 zugeordnet sind.

Beispielsweise kann es so eingerichtet sein, daß jeder Taste 231 je eine Funktion des Geräts 1 und verschiedenen Tasten 231 voneinander verschiedene Funktionen des Geräts 1 zugeordnet sind. Beim Betätigen einer solchen Taste 231 sendet die Sendereinrichtung 21 der Fernbedienung 2 ein Signal S zum Auslösen der dieser Taste 231 allein zugeordneten Funktion des fernzubedienenden Geräts 1 an die Empfängereinrichtung 11 dieses Geräts 1, wobei nach dem Empfang dieses Signals S diese Funktion des Geräts 1 ausgelöst wird.

Die von verschiedenen Tasten 231 erzeugten und voneinander verschiedene Funktionen des Geräts 1 auslösenden Signale S sind in diesem Fall zweckmäßigerweise voneinander verschieden.

Es kann auch so eingerichtet sein, daß einer einzelnen Funktion des fernzubedienenden Geräts 1 eine Taste und zumindest eine weitere Taste 231 zugeordnet ist und jede dieser Tasten 231 bei deren Betätigung je ein Signal S zum Auslösen dieser einzelnen Funktion des Geräts 1 erzeugt, wobei diese Funktion erst ausgelöst wird, nachdem jede dieser Tasten 231 betätigt worden ist und ihr Signal S gesendet hat.

Die Betätigung dieser Tasten kann in einer bestimmten Reihenfolge zeitlich nacheinander und/oder gleichzeitig erfolgen. Entsprechen werden die von diesen Tasten erzeugten Signale S zeitlich nacheinander und/oder gleichzeitig gesendet. Die einzelne Funktion des Geräts 1 wird erst ausgelöst, nachdem jedes dieser zwei oder mehreren Signale S gesendet worden ist und keines fehlt. Sie können voneinander verschieden und/oder untereinander gleich sein.

Die voneinander verschiedene Funktionen des fernzubedienenden Geräts 1 auslösenden Signale S sind zweckmäßigerweise voneinander verschieden gewählt und können beispielsweise voneinander verschiedene Codes, insbesondere Codes in Form bestimmter Impulsfolgen sein.

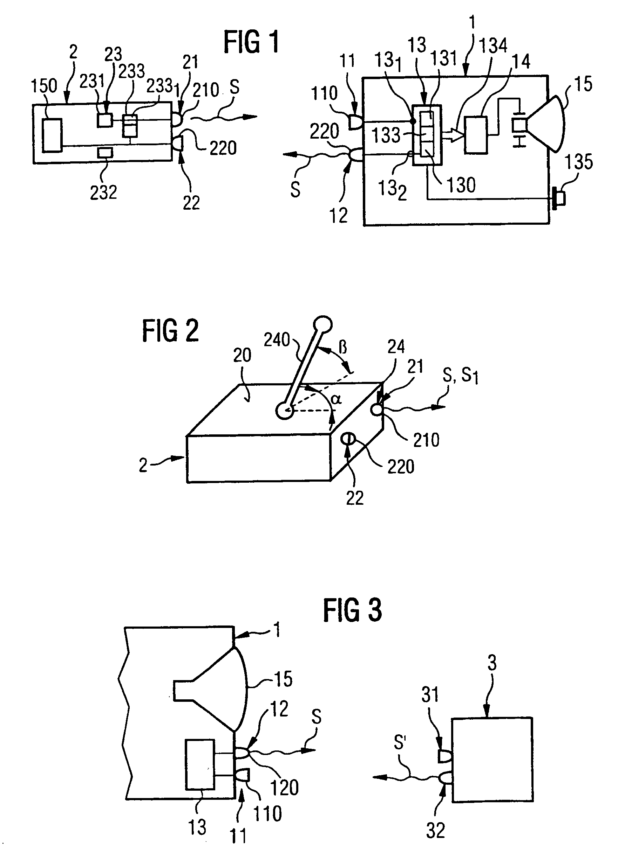

In der Figur 1 ist der Einfachheit halber nur eine einzige Taste 231 stellvertretend für alle anderen der in Wirklichkeit mehreren vorhandenen Tasten 231 der Tastatur 23 dargestellt. Das im folgenden beschriebene gilt für jede vorhandene einzelne Taste 231 und für jedes dieser Taste 231 zugeordnete Signal S zum Auslösen einer diesem Signal S zugeordneten Funktion des fernzubedienenden Geräts 1 in gleicher Weise.

Ist einer Taste 231 ein Signal S zum Auslösen einer bestimmten Funktion des fernzubedienenden Geräts 1 fest zugeordnet, befindet sich die Fernbedienung 2 in einem durch diese feste Zuordnung bestimmten Zustand. Das Signal S hängt üblicherweise vom Typ und/oder Hersteller des fernzubedienenden Geräts 1 ab. Besteht die Möglichkeit, der Taste 231 wahlweise ein anderes als das bisherige Signal S zuzuordnen, das bei Betätigung dieser Taste 231 eine andere Funktion des fernzubedienenden Geräts 1 auslöst, wird die Fernbedienung 2 wahlweise vom bisherigen in einen anderen bestimmten Zustand gebracht.

Die Fernbedienung 2 weist nun eine Zuordnungseinrichtung auf, die das von der Empfängereinrichtung 22 dieses Bedienungsgeräts 2 empfangene Signal S zum Auslösen der Funktion des fernzubedienenden Geräts 1 und den bestimmten Zustand fest einander zuordnet, und die Sendereinrichtung 21 ist so ausgebildet, daß sie wahlweise das dem bestimmten Zustand des Bedienungsgeräts 2 nunmehr fest zugeordnete Signal S sendet, wenn die Fernbedienung 2 diesen bestimmten Zustand eingenommen hat.

Die Zuordnungseinrichtung weist beispielsweise eine Speichereinrichtung 233 zum Speichern des von der Empfängereinrichtung 22 der Fernbedienung 2 empfangenen Signals S zum Auslösen der Funktion des fernzubedienenden Geräts 1 bei einem bestimmten Speicherplatz 233₁ auf, und die Sendereinrichtung 21 der Fernbedienung 2 weist eine Wähleinrichtung in Form der Taste 231 zum Wählen des bestimmten Speicherplatzes 233₁ und zum wahlweisen Senden des beim gewählten bestimmten Speicherplatz 233₁ gespeicherten Signals S auf.

Die Zuordnungseinrichtung besteht somit aus der Tastatur 23 und der Speichereinrichtung 233, bei der beispielsweise für jede Taste 231 je ein Speicherplatz 233₁ für je ein Signal S zum Auslösen einer Funktion des fernzubedienenden Geräts 1 vorhanden ist.

Die Sendereinrichtung 21 der Fernbedienung 2 umfaßt die Tastatur 23, der mit dieser verbundenen Speichereinrichtung 233 und einer mit der Speichereinrichtung 233 verbundenen Signalsender 210, der bei Betätigung einer beliebigen Taste 231 der Tastatur 23 das dieser Taste 231 zugeordnete und in einem mit dieser Taste 231 verbundenen Speicherplatz 233₁ der Speichereinrichtung 233 gespeicherte Signal S sendet.

Die Empfängereinrichtung 22 der Fernbedienung 2 umfaßt einen Signaldetektor 220 zum Empfang jedes von der Sendereinrichtung des 12 des fernzubedienenden Geräts 1 gesendeten Signals S und die Zuordnungseinrichtung, wobei der Signaldetektor 220 mit jedem vorhandenen Speicherplatz 233₁ zum Speichern eines Signals S zum Auslösen einer Funktion des fernzubedienenden Geräts 1 der Speichereinrichtung 233 der Zuordnungseinrichtung verbunden ist, damit ein empfangenes Signal S wahlweise in jedem der Speicherplätze 233₁ gespeichert werden kann.

Die Empfängereinrichtung 11 des Telekommunikationsendgeräts 1 umfaßt einen Signaldetektor 110 zum Empfang jedes von der Sendereinrichtung 21 der Fernbedienung 2 gesendeten Signals S zum Auslösen einer Funktion des fernzubedienenden Geräts 1 und eine mit diesem Signaldetektor 110 verbundene Einrichtung 133 zum Erzeugen dieser Auslösung nach einem Empfang dieses Signals S.

Die Einrichtung 133 zum Auslösen einer Funktion des fernzubedienenden Telekommunikationsendgeräts 1 ist beispielsweise mit einem Bildgenerator 14 dieses Geräts 1 und einen mit dem Bildgenerator 14 verbundenen Bildschirm 15 dieses Geräts 1 verbunden. Die Einrichtung 133 veranlaßt aufgrund eines oder mehrerer bestimmter Signale S, die von ihr empfangen werden, den Bildgenerator 14 zur Erzeugung bestimmter Bilder, die auf dem Bildschirm angezeigt werden.

Die Sendereinrichtung 12 des Telekommunikationsendgeräts 1 umfaßt einen Generator 130 zur wahlweisen Erzeugung jedes vorgesehenen Signals S zum Auslösen einer Funktion des Geräts 1 und einen mit diesem Generator 130 verbundenen Signalsender 120, der dieses Signal S zum Empfang durch den Signaldetektor 220 der Empfängereinrichtung 22 der Fernbedienung 2 sendet.

Beispielsweise erzeugt der Generator 130 der Sendereinrichtung 12 jedes Signal S in elektrischer Form und weist der Signalsender 120 einen elektrooptischen Wandler zur Umwandlung dieses Signals S in ein entsprechendes optisches Signal S auf, das gesendet wird. Entsprechend kann dann der Signaldetektor 220 der Empfängereinrichtung 22 der Fernbedienung 2 einen optoelektrischen Wandler zur Umwandlung des empfangenen optischen Signals S in ein entsprechendes elektrisches Signal S aufweisen, das in einem Speicherplatz 233₁ der Speichereinrichtung 233 der Zuordnungseinrichtung gespeichert werden kann.

Anstelle optischer Signale S wie beispielsweise Infrarotsignale S können auch andersartige Signale S, beispielsweise Mikrowellen- oder Ultraschallsignale verwendet werden, wobei dann der Signalsender 120 des Geräts 1 einen Wandler zur Umwandlung jedes zu sendenden elektrischen Signals S in ein entsprechendes Mikrowellen- bzw. Ultraschallsignal S und der Signaldetektor 220 der Fernbedienung 2 einen Wandler zur Umwandlung jedes empfangenen Mikrowellen- bzw. Ultraschallsignal S in ein entsprechendes elektrisches Signal S aufweist und/oder der Signalsender 210 der Fernbedienung 2 einen Wandler zur Umwandlung jedes zu sendenden elektrischen Signals S in ein entsprechendes Mikrowellen- bzw. Ultraschallsignal S und der Signaldetektor 110 des Geräts 1 einen Wandler zur Umwandlung jedes empfangenen Mikrowellen- bzw. Ultraschallsignal S in ein entsprechendes elektrisches Signal S aufweist.

Die Einrichtung 133 zum Auslösen einer Funktion des fernzubedienenden Telekommunikationsendgeräts 1 der Empfängereinrichtung 110 dieses Geräts 1 und dessen Generator 130 zur wahlweisen Erzeugung jedes vorgesehenen Signals S zum Auslösen einer Funktion des Geräts 1 sind vorzugsweise softwaremäßig in einem Mikroprozessor 13 realisiert. In diesem Fall ist beispielsweise der Signaldetektor 110 der Empfängereinrichtung 11 des Geräts 1 mit einem Eingangstor 13₁ des Prozessors 13, der Signalsender mit einem Ausgangstor 13₂ des Prozessors 13 und der Bildgenerator 14 über beispielsweise einen Bus 134 mit dem Prozessor 13 verbunden.

Der Prozessor 13 kann vorteilhafterweise als Auswerteprozessor benutzt werden, mit welchem der Benutzer, z.B. über den Bildschirm 15, über die Funktion und die entsprechend auf der Fernbedienung 2 durchzuführenden Bedienschritte unterwiesen wird. Der Ablauf der Programmierung der lernfähigen Fernbedienung 2 ist beispielsweise wie folgt:
a) Das fernzubedienende Endgerät 1 ist im Normalzustand.
b) Der Benutzer drückt entweder eine am Endgerät 1 vorhandenen Programmiertaste 135 oder eine an der Fernbedienung 2 vorhandene Programmiertaste 232, um den Programmiervorgang zum Programmieren der Fernbedienung 2 einzuleiten.
c) Der Prozessor 13 im Endgerät 1 gibt an den Bildgenerator 14 eine entsprechende Information zur Darstellung auf dem Bildschirm 15 des Endgeräts 1. Der Bildschirm kann auch ein auf der Fernbedienung 2 untergebrachter Anzeigemodul 150 sein, wobei in diesem Fall die Datenkommunikation über die Sendereinrichtung 12 des Endgeräts 1 und die Empfängereinrichtung 22 der Fernbedienung 2 erfolgen kann.
d) Der Benutzer wird durch diese Information instruiert, eine bestimmte Taste 231 auszuwählen und dann zu drücken.
e) Die Sendereinrichtung 21 der Fernbedienung 2 emittiert auf diesen Tastendruck ein Signal S z.B. mit der gegenwärtigen Codierung der Taste 231 oder gegebenenfalls einen Code S mit der Bedeutung "umcodiert".
f) Dieses Signal S wird über die Empfängereinrichtung 11 des Endgerätes 1 aufgenommen und über das Eingangstor 13₁ des Mikroprozessors 13 aufgenommen.
g) Der Prozessor 13 sendet nun das entsprechende Codesignal S oder eine Codesequenz S über das Ausgangstor 13₂ und den Signalsender 120 des Endgerätes 1 zur Fernbedienung 2 zurück.
h) Das von der Fernbedienung 2 empfangene Signal S wird über die Sendereinrichtung 21 der Fernbedienung 2, die Empfängereinrichtung 11 des Endgeräts 1 und das Eingangstor 13₁ des Prozessors 13 quittiert und eine nächste Programmierung eingeleitet.
i) Wählt der Benutzer das Programmierende über die Programmiertaste 135 des Endgeräts 1, die Programmiertaste 232 der Fernbedienung 2, eine entsprechend belegte andere Taste oder erreicht das Ende des Programmiervorganges, dann
   i1) erfolgt im allgemeinen Fall die Rückkehr des Endgeräts 1 in den Normalzustand oder
   i2) eine Verzweigung zum Schritt c).
ENDE des Ablaufs.

Sollte z.B. eine Tastatur 23 mit semantisch eindeutiger Tastenzuordnung für ein bestimmtes Endgerät 1 programmiert werden, so kann der Vorgang praktisch automatisch ablaufen. Das heißt, die Tastatur 23 und das Endgerät 1 kommunizieren nach dem Start des Ablaufs durch den Benutzer und übertragen beiderseitig Informationen und Konfigurationen usw. Im Falle einer Tastatur 23 werden alle Tasten 231 dann automatisch nacheinander abgefragt und entsprechende Codes S zugeordnet.

Die Weiterschaltung erfolgt jeweils nach dem Rücklesen des entsprechenden Quittungscodes.

In der Figur 2 ist ein Beispiel einer Fernbedienung 2 zum Fernbedienen des Telekommunikationsendgeräts 1 nach Figur 1 anstelle der Fernbedienung 2 nach Figur 1 dargestellt, die neben der vorstehend beschriebenen Sendereinrichtung 21 zum wahlweisen Senden eines Signals S zum Auslösen einer Funktion des Endgeräts 1 eine Sendereinrichtung 24 zum Senden eines Zustandssignals S1 zur eindeutigen Kennzeichnung jedes bestimmten Zustandes der Fernbedienung 2 aufweist.

Die Fernbedienung 2 nach Figur 2 weist anstelle einer Tastatur einen Joystick 240 auf, der relativ zu einer bestimmten Ebene 20 in verschiedene Stellungen gebracht werden kann, deren jede durch je einen Wert des dargestellten Azimutwinkels α und je einen Wert des dargestellten Höhenwinkels β gekennzeichnet werden kann. Jedem Paar bestimmter Werte der beiden Winkel α und β entspricht je ein bestimmter Zustand des Fernbedienung 2 nach Figur 2, der durch je ein bestimmtes kodiertes Zustandssignal S1 gekennzeichnet werden kann.

Jedes Zustandssignal S1 wird von der Fernbedienung 2 nach Figur 2 gesendet, beispielsweise durch den Signalsender 210 der Sendereinrichtung 21 zum Senden eines Signals S zum Auslösen einer Funktion des Endgeräts 1 oder durch einen extra dafür vorgesehenen, nicht eigens dargestellten Signalsender.

Das gesendete Zustandssignal S1 wird von einer Empfängereinrichtung des Endgeräts 1, beispielsweise dessen bereits vorhandener Empfängereinrichtung 11 mit dem Empfangsdetektor 110 empfangen und einer Zuordnungseinrichtung 133 dieses Geräts 1 zugeführt, die dem empfangenen Zustandssignal S1 ein Signal S zum Auslösen einer Funktion des Geräts 1 zuordnet, das nach dieser Zuordnung von der Sendereinrichtung 12 dieses Geräts 1 zu senden ist. Die Empfängereinrichtung 22 mit dem Empfangsdetektor 220 der Fernbedienung 2 empfängt dieses Signal S und ordnet diesem Signal S und damit der von diesem Signal S auszulösenden Funktion des Endgeräts 1 den durch das gesendete Zustandssignal S1 gekennzeichneten Zustand der Fernbedienung 2 zu.

Wird danach die Fernbedienung 2 wahlweise diesen Zustand gebracht, sendet diese das Signal S zum Auslösen der diesem Zustand zugeordneten Funktion des Endgeräts 1 und diese Funktion wird nach Empfang dieses Signals S von der Empfängereinrichtung 11 dieses Geräts 1 ausgelöst.

Die Zuordnungseinrichtung 133 des Endgeräts 1 ist zweckmäßigerweise im Prozessor 13 softwaremäßig realisiert.

Eine Fernbedienung 2 mit einem Joystick 240 könnte z.B. für interaktives Fernsehen vom fernzubedienenden Gerät 1 beispielsweise in Form eines Fernsehgeräts aus für eine bestimmte Anwendung aus einem Applet oder einer mit dem Programm übertragenen Information für eine bestimmte Aufgabe eingestellt werden. Anwendungsbeispiel: Es wird eine Fernbedienung 2 mit einem Joystick 240 beschafft, die eine Sendereinrichtung 21 und Empängereinrichtung 22 aufweist. Diese Fernbedienung 2 wird vor dem Gerät 1 aufgestellt und eingeschaltet. Nun sendet die Fernbedienung 2 ein Bedienerapplet, z.B. in HTML, an das Gerät 1. Dieses stellt die Geräteeigenschaften aus dem z.B. HTML/JAVA/Applet dar. Durch den Benutzer erfolgt ein Austausch von Information und eine Parametrierung der Eigenschaften der Fernbedienung 2 mit dem Joystick 240. Beispielsweise wird auf dem Bildschirm 15 des Geräts 1 darum gebeten, stark nach vorne zu drücken, das der dabei erreichten Stellung des Joysticks 240 entsprechende Zustandssignal S1 wird zum Gerät 1 übermittelt, und danach wird die Fernbedienung 2 vom Gerät 1 kalibriert.

Das von der Fernbedienung 2 gesendete Bedienerapplet wird vom Prozessor 13 verarbeitet, der demnach eine Einrichtung zur Erzeugung einer Information, die einer bestimmten Funktion des fernzubedienenden Geräts 1 zugeordnet ist und dazu auffordert, die Fernbedienung 2 in einen bestimmten Zustand, im Beispiel den Joystick 240 in eine bestimmte Stellung zu bringen.

Beim Beispiel nach Figur 3 kann das nur bruchstückhaft in seinen hier wesentlichen Teilen dargestellte und von einem nicht dargestellten Bedienungsgerät fernzubedienende Gerät 1 mit einem von diesem Gerät 1 und diesem Bedienungsgerät räumlich getrennten zusätzlichen Gerät 3 in Kommunikation treten.

Dazu weist das zusätzlichen Gerät 3 eine Empfängereinrichtung 31 zum Empfang eines von der Sendereinrichtung 12 des fernzubedienenden Geräts 1 gesendeten Signals, beispielsweise eines Signals S zum Auslösen einer Funktion des zusätzlichen Geräts 3, und eine Sendereinrichtung 32 zum Senden eines von der Empfängereinrichtung 11 des fernzubedienenden Geräts 1 zu empfangenden Signals S' auf.

Auf diese Weise kann jedes derart ausgebildete zusätzliche Gerät 3, das sich im Wirkungsbereich der Sendereinrichtung 12 und Empfängereinrichtung 11 des fernzubedienenden Geräts 1 befindet, beispielsweise programmiert oder ggf. auch nachhaltig beeinflußt werden.

Beispielsweise ist das fernzubedienende Gerät 1 ein Fernsehgerät oder Telekommunikationsendgerät mit Bildschirm 15 oder ein Videorecorder usw. und das zusätzliche Gerät 3 ein Haushaltsgerät.

Wird z.B ein JAVA-Applet auf diesem Gerät 1 aktiv, so kann entweder unbemerkt oder vom Benutzer initiiert das die Sendereinrichtung 32 und der Empfängereinrichtung 31 aufweisende Haushaltsgerät 3 aus einem Applet, welches beispielsweise mit einem Werbespot übertragen wurde, herausprogrammiert werden.

Beispielsweise kann der Benutzer über ein WEB-fähiges Fernsehgerät 1 ein kommerziell erworbenes Applet auf dem Prozessor 13 des Geräts 1 laufen lassen, um damit neue Funktionalität in das Haushaltsgerät 3 zu laden. Ein praktisches Beispiel dafür ist ein Werbespot für ein Waschmittel, der gleichzeitig ein Programm für den optimalen Waschvorgang mit genau diesem Waschmittel enthält, mit dem eine das Haushaltsgerät 3 bildende Waschmaschine programmiert wird.

Das besondere hierbei ist, daß Funktionalität von einer Fernbedienungs-Schnittstelle nun auch anderen bzw. zusätzlichen Geräten 3 zur Verfügung gestellt werden kann. Ist ein solches zusätzliches Gerät 3 nicht im direkten Einzugsbereich des fernzubedienenden Geräts 1, wie z.B. eine Waschmaschine, so kann beispielsweise eine Übertragungsleitung, beispielsweise eine optische Glasfaser, den Bereich der Verbindung zwischen dem fernzubedienenden Gerät und dem zusätzlichen Gerät 3 vergrößern.

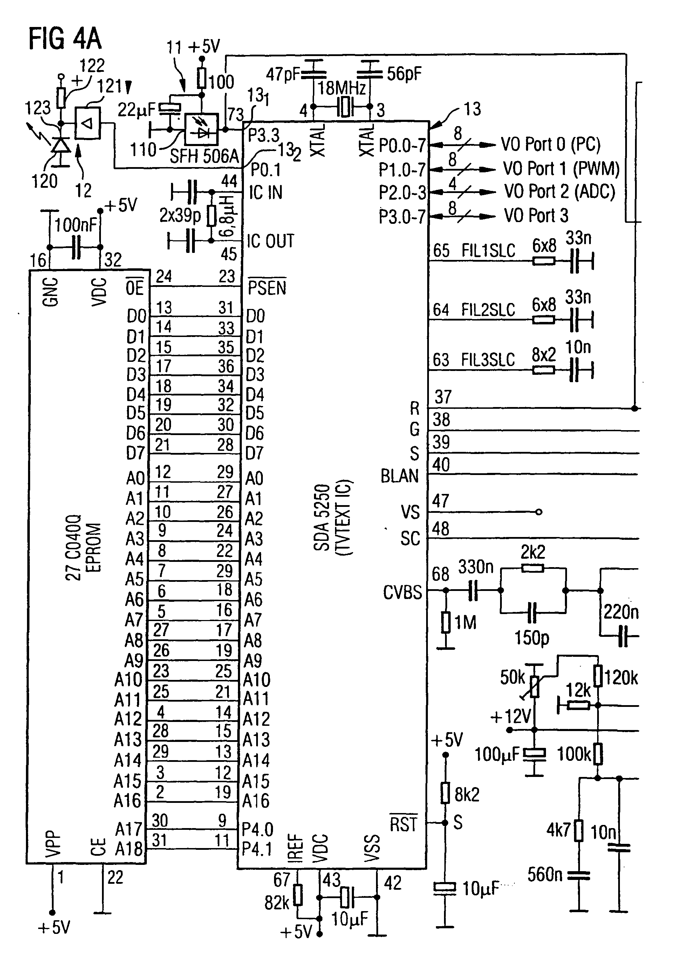

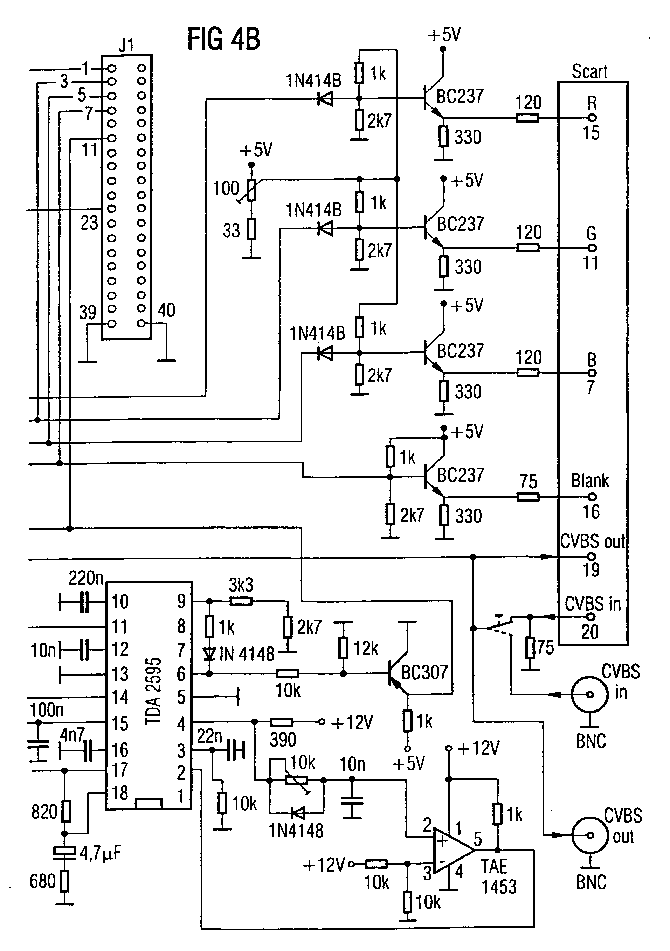

Der in der Figur 4 dargestellte Schaltplan eines einen Mikroprozessor 13 und eine mit dem Prozessor 13 verbundene Empfängereinrichtung 11 enthaltenden kommerziellen Bausteins für ein fernzubedienendes Telekommunikationsendgerät 1, im Beispiel der Schaltplan des Bausteins TVTEXT SDA 5250 der Firma Siemens, ist durch die mit dem Prozessor 13 verbundene Sendereinrichtung 12 und eine entsprechende Betriebssoftware erweitert.

Nach Figur 4 weist die Empfängereinrichtung 11 den aus einer Infrarotdiode bestehenden Signalempfänger 110 auf, der mit dem hier mit 13₁ und im Originalschaltplan mit P3.3 bezeichneten Eingangstor des Prozessors 13 verbunden ist. Die Sendereinrichtung 12 weist einen Verstärker 121, den aus einer Infrarotdiode bestehenden Signalsender 120 und einen Pull-up-Widerstand 122 auf. Die Diode 120 und der Pull-up-Widerstand 122 sind in Reihe zwischen Erde und elektrischer Vesorgungsspannung geschaltet. Der Verstärker 121 ist eingangsseitig mit einem hier mit 13₂ und im Schaltplan mit P0.1 bezeichneten Ausgangstor des Prozessors 13 und ausgangsseitig mit einer die Diode 120 und den Pull-up-Widerstand 122 miteinander verbindenden Verbindungsleitung 123 verbunden.

## Patentansprüche

1. Fernbedienungsanordnung mit
- einem fernzubedienenden Gerät(1), das eine Empfängereinrichtung (11) zum Empfang eines Signals (S) zum Auslösen einer Funktion dieses Gerätes (1) aufweist, und mit
- einem räumlich vom fernzubedienenden Gerät (1) getrennten Bedienungsgerät (2), das eine Sendereinrichtung (21) zum wahlweisen Senden des Signals (S1) zum Auslösen der Funktion des fernzubedienenden Geräts (1) aufweist,
wobei
- das fernzubedienende Gerät (1) zusätzlich zu dessen Empfängeinrichtung (11) eine Sendereinrichtung (12) zum wahlweisen sendern des Signals (5) zum Auslösen der Funktion dieses Geräts (1) aufweist, und
- das Bedienungsgerät (2) zusätzlich zu dessen Sendereinrichtung (21) eine Empfangseinrichtung (22) zum Empfang des Signals (5) zum Auslösen der Funktion des fernzubedienenden Geräts (1) aufweist und wahlweise zumindest einen bestimmten Zustand annehmen kann,
- das Bedienungsgerät eine Zuordnungseinrichtung (23, 233) aufweist, die das von der Empfängereinrichtung (22) des Bedienungsgeräts (2) empfangene Signal (S) zum Auslösen der Funktion des fernzubedienenden Geräts (1) und den bestimmten Zustand fest einander zuordnet, und das Bedienungsgerät (2) dazu ausgebildet ist, nach dieser Zuordnung das Signal (S) zum Auslösen der Funktion des fernzubedienenden Geräts (1) an das fernzübedienende Gerät (1) zu senden, wenn das Bedienungsgerät (2) den bestimmten Zustand annimmt,
- das Bedienungsgerät (2) eine Sendereinrichtung (24) zum Senden eines Zustandssignals (S1) zur eindeutigen Kennzeichnung des bestimmten Zustandes (St) des Bedienungsgeräts (2) aufweist,
- das fernzubedienende Gerät (1) eine Empfängereinrichtung (11) zum Empfang des vom Bedienungsgerät (2) gesendeten zustandssignals (S1) und eine Zuordnungseinrichtung (131) aufweist, die dem empfangenen Zustandssignal (S1) das Signal (S) zum Auslösen der Funktion des fernzubedienenden Geräts (1) zuordnet, und das fernzubedienende Gerät (2) dazu ausgebildet ist, nach dieser Zuordnung das Signal (S) zum Auslösen der Funktion an das Bedienungsgerät (2) zu senden,

2. Anordnung nach Anspruch 1, **dadurch gekennzeichnet, daß** die Zuordnungseinrichtung (23)
- eine Speichereinrichtung (233) zum Speichern des von der Empfängereinrichtung (22) des Bedienungsgeräts (2) empfangenen Signals (S) zum Auslösen der Funktion des fernzubedienenden Geräts (1) bei einem bestimmten Speicherplatz (233₁) und
- die Sendereinrichtung (21) des Bedienungsgeräts (2) eine Wähleinrichtung (231) zum Wählen des bestimmten Speicherplatzes (233₁) und zum wahlweisen Senden des beim gewählten bestimmten Speicherplatz (233₁) gespeicherten Signals (S) aufweist.

3. Anordnung nach einem der Ansprüche 1 oder 2, **gekennzeichnet durch** eine
- Einrichtung (13) zur Erzeugung einer Information, die der bestimmten Funktion des fernzubedienenden Geräts (1) zugeordnet ist und dazu auffordert, das Bedienungsgerät (2) in den bestimmten Zustand zu bringen.

4. Anordnung nach einem der vorhergehenden Ansprüche, **dadurch gekennzeichnet, daß** die Sendereinrichtung (12) und/oder Empfängereinrichtung (11) des fernzubedienenden Geräts (1) einen Prozessor (13) aufweist.

5. Anordnung nach einem der vorhergehenden Ansprüche, **dadurch gekennzeichnet, daß** das fernzubedienende Gerät (1) einen Bildgenerator (14) zur Erzeugung eines Bildes auf einem Bildschirm (15, 150) aufweist.

6. Anordnung nach einem der vorhergehenden Ansprüche, **dadurch gekennzeichnet, daß** das Bedienungsgerät (2) eine tragbare mobile Fernbedienung ist.

7. Anordnung nach einem der vorhergehenden Ansprüche, **dadurch gekennzeichnet, daß** zumindest ein vom fernzubedienenden Gerät (1) und vom Bedienungsgerät (2) räumlich getrenntes zusätzlichen Gerät (3) vorhanden ist, das
- eine Empfängereinrichtung (31) zum Empfang eines von der Sendereinrichtung (12) des fernzubedienenden Geräts (1) gesendeten Signals (S) und
- eine Sendereinrichtung (32) zum Senden eines von der Empfängereinrichtung (11) des fernzubedienenden Geräts (1) zu empfangenden Signals (S) aufweist.

8. Anordnung nach Anspruch 7, **dadurch gekennzeichnet, daß** das zusätzliche Gerät (3) ein Haushaltsgerät ist.

9. Fernzubedienendes Gerät (1), das folgende Merkmale aufweist:
- eine Empfängereinrichtung (11) zum Empfang eines Signals (S) zum Auslösen einer Funktion des Geräts (1) und zum Empfang eines Zustandssignals (S1) von einem anderen Gerät (2),
- eine Sendereinrichtung (12) zum Senden wenigstens eines Signals (S, S') zu einer Beeinflussung zumindest des anderen Geräts (2, 3), und
- eine Zuordnungseinrichtung (131), die dazu ausgebildet ist, jedem von mehreren empfangenen zustandssignalen (S1) je ein Signal (S) zum Auslösen der Funktion des fernzubedienenden Geräts (1) zuzuordnen, wobei das fernzubedienende Gerät (1) dazu ausgebildet ist, nach einer Zuordnung eines Zustandssignals (S1) zu einem Signal (S) zum Auslösen der Funktion des fernzubedienenden Geräts (1) das Signal (S) zum Auslösen der Funktion des fernzubedienenden Geräts (1) an das Bediengerät (2) zu senden.

10. Verfahren zum Programmieren einer Fernbedienungsanordnung (2), die zum Bedienen eines fernzubedienenden Geräts (1) dient, mit folgenden Verfahrensschritten:
- Überführen der Fernbedienungsanordnung (2) in einen bestimmten Zustand (α, β),
- Aussenden eines dem zustand (α, β) zugeordneten Zustandssignals (S1) an das fernzubedienende Gerät (1),
- Zuordnen des Zustandssignals (S1) zu einem Funktionsauslösesignal (S) in dem fernzubedienenden Gerät (1) und Aussenden des Funktionsauslösesignals an die Fernbedienungsanordnung (2),
- Zuordnen des Funktionsauslösesignals (S) zu dem bestimmten Zustand in der Fernbedienungsahordnung (2), wobei die Fernbedienungsanordnung nachfolgend dieses Funktionsauslösesignal (S) aussendet, wenn sie diesen Zustand annimmt.

## Claims

1. A remote control configuration having
- an appliance (1) to be remotely controlled, which comprises a receiver (11) for receiving a signal (S) for triggering a function of this appliance (1), and having
- an operating device (2) spatially separated from the appliance (1) to be remotely controlled, which operating device comprises a transmitter (21) for selectively transmitting the signal (S1) for triggering the function of the appliance (1) to be remotely controlled,
wherein
- in addition to this receiver (11), the appliance to be remotely controlled (1) comprises a transmitter (12) for selectively transmitting the signal (5) for triggering the function of this appliance (1), and
- in addition to this transmitter (21), the operating device (2) comprises a receiver (22) for receiving the signal (5) for triggering the function of the appliance (1) to be remotely controlled and can selectively assume at least one determined status,
- the operating device comprises an allocator (23, 233), which permanently allocates the signal (S) received from the receiver (2) of the operating device (2) for triggering the function of the appliance (1) to be remotely controlled and the determined status, and the operating device (2) is designed, after this allocation, to transmit the signal (S) for triggering the function of the appliance (1) to be remotely controlled to the appliance (1) to be remotely controlled when the operating device (2) assumes the determined status,
- the operating device (2) comprises a transmitter (24) for transmitting a status signal (S1) for the clear identification of the determined status (St) of the operating device (2),
- the appliance (1) to be remotely controlled comprises a receiver (1) for receiving the status signal (S1) transmitted by the operating device (2) and an allocator (131), which allocates the signal (S) for triggering the function of the appliance (1) to be remotely controlled to the received status signal (S1), and the appliance (2) to be remotely controlled is designed to transmit the signal (S) for triggering the function to the operating device (2) after this allocation.

2. A remote control configuration according to Claim 1,
**characterised in that**
- the allocator (23) comprises a storage device (223) for storing the signal (S) received by the receiver (22) of the operating device (2) for triggering the function of the appliance (1) to be remotely controlled at a determined memory location (233₁) and
- the transmitter (21) of the operating device (2) comprises a selector (231) for selecting the determined memory location (233₁) and for selectively transmitting the signal (S) stored at the selected determined storage location (233₁).

3. A configuration according to one of Claims 1 or 2,
**characterised by**
- a device (13) for generating an item of information that is allocated to the determined function of the appliance (1) to be remotely controlled and prompts the operating device (2) to be brought into the determined status.

4. A configuration according to one of the preceding Claims,
**characterised in that** the transmitter (12) and/or receiver (11) of the appliance (1) to be remotely controlled comprises a processor (13).

5. A configuration according to one of the preceding Claims,
**characterised in that** the appliance (1) to be remotely controlled comprises an image generator (14) for generating an image on a screen (15, 150).

6. A configuration according to one of the preceding Claims,
**characterised in that** the operating device (2) is a handheld mobile remote control.

7. A configuration according to one of the preceding Claims,
**characterised in that** there is provided at least one additional device (3) that is spatially separated from the appliance (1) to be remotely controlled and from the operating device (2), which
- comprises a receiver (31) for receiving a signal (S) transmitted by the transmitter (12) of the appliance (1) to be remotely controlled and
- a transmitter (32) for transmitting a signal (S) to be received by the receiver (11) of the appliance (1) to be remotely controlled.

8. A configuration according to Claim 7,
**characterised in that** the additional device (3) is a domestic appliance.

9. An appliance (1) to be remotely controlled, comprising the following features:
- a receiver (11) for receiving a signal (S) for triggering a function of the appliance (1) and for receiving a status signal (S1) from another device (2) ,
- a transmitter (12) for transmitting at least one signal (S, S') to influence at least the other device (2, 3), and
- an allocator (131), which is designed to allocate a signal (S) for triggering the function of the appliance (1) to be remotely controlled to each of several received status signals (S1), with the appliance (1) to be remotely controlled being designed to transmit the signal (S) for triggering the function of the appliance (1) to be remotely controlled to the operating device (2) after a status signal (S1) has been allocated to a signal (S) for triggering the function of the appliance (1) to be remotely controlled.

10. A method for programming a remote control configuration (2), which serves to operate an appliance (1) to be remotely operated, having the following method steps:
- transferring the remote control configuration (2) into a determined status (α, β),
- emitting a status signal (S1) allocated to the status (α, β) to the appliance (1) to be remotely controlled,
- allocating the status signal (S1) to a function-triggering signal (S) in the appliance (1) to be remotely controlled and emitting the function-triggering signal to the remote control configuration (2),
- allocating the function-triggering signal (S) to the determined status in the remote control configuration (2), whereby the remote control configuration subsequently emits this function-triggering signal (S) when it assumes this status.

## Revendications

1. Dispositif de télécommande comprenant
- un appareil à télécommander (1) comportant une installation de réception (11) pour recevoir un signal (S) qui déclenche une fonction de cet appareil (1), et
- un appareil de commande (2) séparé spatialement de l'appareil à télécommander (1), qui comporte une installation d'émission (21) pour émettre sélectivement le signal (S1) déclenchant la fonction de l'appareil à télécommander (1),
dispositif dans lequel
- l'appareil à télécommander (1) comporte en plus de son installation de réception (11), une installation d'émission (13) pour émettre sélectivement le signal (S) déclenchant la fonction de cet appareil (1), et
- l'appareil de télécommande (2) comporte en plus de son installation d'émission (21), une installation de réception (22) pour recevoir le signal (S) servant à déclencher la fonction de l'appareil à télécommander (1) et qui peut prendre sélectivement au moins un état déterminé,
- l'appareil de télécommande comporte une installation d'association (23, 233) qui associe solidairement le signal (S) reçu dans l'installation de réception (22) de l'appareil de télécommande (2) pour déclencher la fonction de l'appareil à télécommander (1) et l'état déterminé, et cet appareil de télécommande (2) est réalisé pour que selon cette association, le signal (S) de déclenchement de la fonction de l'appareil à télécommander (1) soit envoyé à l'appareil à télécommander (1) lorsque l'appareil de télécommande (2) se met dans l'état déterminé,
- l'appareil de télécommande (2) comporte une installation d'émission (24) pour émettre un signal d'état (S1) caractérisant de manière univoque l'état déterminé (St) de l'appareil de télécommande (2),
- l'appareil à télécommander (1) comporte une installation de réception (11) pour recevoir le signal d'état (S1) envoyé par l'appareil de télécommande (2) et une installation d'association (131) qui associe au signal d'état reçu (S1), le signal (S) pour déclencher la fonction de l'appareil à télécommander (1) et l'appareil à télécommander (1) est réalisé pour qu'après cette association, il envoie le signal (S) de déclenchement de la fonction à l'appareil de télécommande (2).

2. Dispositif selon la revendication 1,
**caractérisé en ce que**
l'installation d'association (23) comprend :
- une installation de mémoire (233) pour mémoriser le signal (S) reçu de l'installation de réception (22) de l'appareil de télécommande (2) pour déclencher la fonction de l'appareil à télécommander (1) dans un certain emplacement de mémoire (233₁), et
- l'installation d'émission (21) de l'appareil de télécommande (2) comporte une installation de sélection (231) pour sélectionner l'emplacement de mémoire déterminé (233₁) et pour émettre de manière sélective le signal (S) mémorisé à l'emplacement de mémoire (233₁) sélectionné de manière déterminée.

3. Dispositif selon l'une des revendications 1 ou 2,
**caractérisé par**
- une installation (13) pour générer une information associée à la fonction déterminée de l'appareil à télécommander (1) et qui demande à ce que l'appareil de télécommande (2) se mette dans l'état déterminé.

4. Dispositif selon l'une des revendications précédentes,
**caractérisé en ce que**
l'installation d'émission (12) et/ou l'installation de réception (11) de l'appareil à télécommander (1) comporte(nt) un processeur (13).

5. Dispositif selon l'une des revendications précédentes,
**caractérisé en ce que**
l'appareil à télécommander (1) comporte un générateur d'image (14) pour générer une image sur un écran d'affichage (15, 150).

6. Dispositif selon l'une des revendications précédentes,
**caractérisé en ce que**
l'appareil de télécommande (2) est une télécommande mobile portable.

7. Dispositif selon l'une des revendications précédentes,
**caractérisé par**
au moins un appareil à télécommander (1) et un appareil supplémentaire (3) séparés spatialement de l'appareil de télécommande (2), cet appareil (3) comportant :
- une installation de réception (31) pour recevoir un signal (S) émis par l'installation d'émission (12) de l'appareil à télécommander (1), et
- une installation d'émission (32) pour émettre un signal (S) reçu par l'installation de réception (11) de l'appareil à télécommander (1).

8. Dispositif selon la revendication 7,
**caractérisé en ce que**
l'appareil supplémentaire (3) est un appareil domestique.

9. Appareil à télécommander (1) ayant les caractéristiques suivantes :
- une installation de réception (11) pour recevoir un signal (S) déclenchant une fonction de l'appareil (1) et pour recevoir un signal d'état (S1) d'un autre appareil (2),
- une installation d'émission (12) pour émettre au moins un signal (S, S') pour influencer au moins l'autre appareil (2, 3), et
- une installation d'association (131) réalisée pour associer à chacun des différents signaux d'état (S1) reçu, un signal (S) pour déclencher la fonction de l'appareil à télécommander (1), cet appareil à télécommander (1) étant réalisé pour qu'après association d'un signal d'état (S1) à un signal (S) pour déclencher la fonction de l'appareil à télécommander (1), ce signal (S) soit émis vers l'appareil de télécommande (2) pour déclencher la fonction de l'appareil à télécommander (1).

10. Procédé de programmation d'un dispositif de télécommande (2) pour commander un appareil à télécommander (1) et comprenant les étapes de procédé suivantes :
- mettre le dispositif de télécommande (2) dans un certain état (α, β),
- émettre un signal d'état (S1) associé à l'état (α, β) vers l'appareil à télécommander (1),
- associer le signal d'état (S1) à un signal de déclenchement de fonction (S) dans l'appareil à télécommander (1) et émettre le signal de déclenchement de fonction à destination de l'appareil à télécommander (2),
- associer le signal de déclenchement de fonction (S) à l'état déterminé dans le dispositif de télécommande (2), ce dispositif de télécommande envoyant ensuite ce signal de déclenchement de fonction (S) lorsqu'il prend cet état.
